# EUROPEAN PATENT APPLICATION

(11) **EP 2 950 309 A1**
(43) Date of publication of application: **02.12.2015**
(21) Application number: 15168628.4
(22) Date of filing: 21.05.2015
(51) Int. Cl.: G11B 27/034

(54) **IMAGE DISPLAYING APPARATUS, DRIVING METHOD THEREOF, AND APPARATUS AND METHOD FOR SUPPORTING RESOURCE**

(30) Priority: 28.05.2014 KR 20140064495
(71) Applicant: Samsung Electronics Co., Ltd, Gyeonggi-do 443-742 (KR)
(72) Inventor: HWANG, Yo-Seop, 103-703 Seoul (KR); LEE, Seung-hoon, 407-602 Seongnam-si (KR)
(74) Representative: Appleyard Lees

(57) **Abstract**

An image displaying apparatus, a driving method thereof, and an apparatus and method for supporting a resource are provided. The image displaying apparatus includes a file provider configured to provide a file, a communicator configured to communicate with an external apparatus that executes a file editing application, and a controller configured to transmit, to the external apparatus, file information provided from the file provider and to edit the file based on editing information about the file received in response to the transmitting of the file information.

## Description

### CROSS-REFERENCE TO RELATED APPLICATION

This application claims priority from Korean Patent Application No. 10-2014-0064495, filed on May 28, 2014 in the Korean Intellectual Property Office, the disclosure of which is incorporated herein by reference in its entirety.

### BACKGROUND

### 1. Field

Apparatuses and methods consistent with exemplary embodiments relate to an image displaying apparatus, a driving method thereof, and an apparatus and method for supporting a resource, and more particularly, to an image displaying apparatus, a driving method thereof, and an apparatus and method for supporting a resource, for performing an operation such as editing on a file recorded using, for example, a television, a set top box (STB), etc., so as to reduce the amount of data processed during the operation, thereby reducing time taken to process data.

### 2. Description of Related Art

Network File System^{™} (NFS) is distributed file-sharing system software that accesses an information communication network such as a local area network (LAN) and allows, e.g., a client computer to access files (e.g., stored in a different computer) over the network much like a local storage of the client computer. NFS may be used to access files that are distributed in a computer of an environment with a different computer type or operating system (OS) than the accessing computer. Since a computer can access a file system on another computer with NFS installed therein like a local file, a file does not have to be manipulated after the file is transmitted. In addition, a file of another system can be used without recognition of a storage site of the file. However, in order to access another system with a different signal system, code conversion and the like need to be considered.

In a related art, NFS technology has been applied to smart televisions (TV) via a product called Evolution Kit. Evolution Kit refers to a product that may be connected to a smart TV to upgrade the software, image quality, and hardware of the smart TV.

However, in the related art, an Evolution Kit that is connected to a smart TV via NFS is limited to simply reading and writing resources of the TV. Accordingly, large files take a significant amount of time to process.

### SUMMARY

Exemplary embodiments overcome the above disadvantages and other disadvantages not described above. Also, the exemplary embodiments are not required to overcome the disadvantages described above, and an exemplary embodiment may not overcome any of the problems described above.

One or more exemplary embodiments provide an image displaying apparatus, a driving method thereof, and an apparatus and method for supporting a resource, for performing an operation such as editing on a file recorded using, for example, a television, a set top box (STB), etc., so as to reduce the amount of data processed during the operation, thereby reducing time taken to process data.

According to an aspect of an exemplary embodiment, there is provided an image displaying apparatus including: a file provider configured to provide a file; a communicator configured to communicate with an external apparatus that executes a file editing application; and a controller configured to transmit, to the external apparatus, file information related to the file provided from the file provider and to edit the file based on editing information about the file received in response to the transmitting of the file information.

The file provider may include at least one of an internal storage in which the file is stored and an interface unit configured to be connected to an external storage in which the file is stored. The file provider, the communicator, and the controller may be included in a main board, and the external apparatus may be a sub board connected to the main board within the image displaying apparatus.

The communicator may be configured to be connected with the external apparatus by a Network File System for sharing a file with the external apparatus.

The editing information may be information associated with at least one of an operation for splitting a file into a plurality of pieces and an operation for truncating a specific region from a file.

The image displaying apparatus may further include a display configured to display a graphic user interface (GUI) screen for editing the file according to execution of the file editing application.

The display may be configured to be directly controlled by the external apparatus.

The controller may include an editor configured to edit the file.

According to an aspect of another exemplary embodiment, there is provided a driving method of an image displaying apparatus, the method including: providing a file; in response to the file being provided, transmitting, to an external apparatus, file information for execution of a file editing application and receiving, from the external apparatus, editing information of the file based on the transmitted file information; and determining whether the file is provided and editing the file based on the received editing information.

The file may be provided through at least one of an internal storage in which the file is stored or an interface unit connected to an external storage in which the file is stored.

The image displaying apparatus may be connected by a Network File System for sharing a file with the external apparatus.

The editing information may be information associated with at least one of an operation for splitting a file into a plurality of pieces and an operation for truncating a specific region from a file.

The method may further include displaying a graphic user interface (GUI) screen for editing the file according to execution of the file editing application.

The displaying may be controlled by the external apparatus.

According to an aspect of another exemplary embodiment, there is provided a resource supporting apparatus for supporting a resource of an image displaying apparatus, the resource supporting apparatus including: an application execution processor configured to execute an application associated with a file provided to the image displaying apparatus, based on file information about the file; and a communicator configured to transmit editing information to the image displaying apparatus so as to enable the image displaying apparatus to edit the file based on the editing information, wherein the file is edited through a user interface (UI) displayed on a screen of the image displaying apparatus in response to the application being executed.

The communicator may be configured to be connected to the image displaying apparatus via a Network File System.

The editing information may be associated with at least one of an operation for splitting a file into a plurality of pieces and an operation for truncating a specific region from a file.

The resource supporting apparatus may further include a controller configured to display, on a screen of the image displaying apparatus, a graphic user interface (GUI) for editing the file.

According to an aspect of another exemplary embodiment, there is provided a resource supporting method for supporting a resource of an image displaying apparatus, the resource supporting method including: receiving file information about a file provided to the image displaying apparatus; executing an application associated with the file based on the received file information; and transmitting editing information to the image displaying apparatus so as to enable the image displaying apparatus to edit the file based on the editing information, wherein the file is edited input through a user interface (UI) displayed on a screen of the image displaying apparatus in response to the application being executed.

According to an aspect of another exemplary embodiment, there is provided a resource supporting apparatus for supporting an image displaying apparatus, the resource supporting apparatus including: a communicator configured to receive, from the image displaying apparatus, a request to edit a file stored in the image display apparatus and information about the file; an application execution processor configured to transmit, to the image displaying apparatus, a command to edit the file and editing information to enable the image display apparatus to edit the file, wherein the resource supporting apparatus performs communication with the image displaying apparatus via Network File System.

### BRIEF DESCRIPTION OF THE DRAWINGS

The above and/or other aspects will be more apparent by describing certain exemplary embodiments with reference to the accompanying drawings, in which:
FIG. 1 is a diagram of an upgrade system for upgrading a level of an image displaying apparatus according to an exemplary embodiment;
FIG. 2 is a diagram illustrating a structure of the image displaying apparatus of FIG. 1 according to another exemplary embodiment;
FIG. 3 is a diagram illustrating main properties of an exemplary embodiment;
FIG. 4 is a diagram illustrating a structure of the image displaying apparatus and the resource supporting apparatus of FIG. 1 or a structure of the main board and the sub board of FIG. 2;
FIG. 5 is a diagram of a modified example of FIG. 4;
FIG. 6 is a diagram illustrating a method for upgrading a level of an image displaying apparatus according to an exemplary embodiment;
FIG. 7 is a flowchart illustrating a driving procedure of an image displaying apparatus or a main board according to an exemplary embodiment; and
FIG. 8 is a flowchart of a driving procedure of an image displaying apparatus or a main board according to another exemplary embodiment.

### DETAILED DESCRIPTION OF THE EXEMPLARY EMBODIMENTS

Certain exemplary embodiments will now be described in greater detail with reference to the accompanying drawings. The matters defined in the specification, such as detailed construction and elements, are provided to assist in a comprehensive understanding of the exemplary embodiments. Exemplary embodiments may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art, the scope of which is defined by the appended claims. Also, well-known functions or constructions are not described in detail since they would obscure the exemplary embodiments with unnecessary detail. Hereinafter, expressions such as "at least one of," when preceding a list of elements, modify the entire list of elements and do not modify the individual elements of the list.

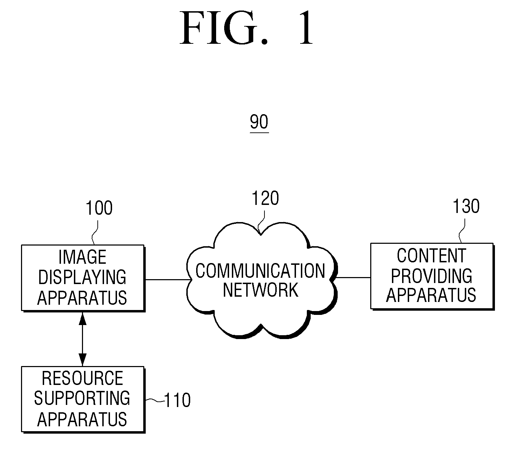

FIG. 1 is a diagram of an upgrade system 90 for upgrading an image displaying apparatus 100 according to an exemplary embodiment.

As illustrated in FIG. 1, the upgrade system 90 according to an exemplary embodiment includes all or some of the image displaying apparatus 100, a resource supporting apparatus 110, a communication network 120, and a content providing apparatus 130.

As used herein, the expression 'includes all or some' means that certain components such as the resource supporting apparatus 110 may be integrated and configured with the image displaying apparatus 100. For purposes of understanding, all of the components of the upgrade system 90 are separately illustrated in FIG. 1.

The image displaying apparatus 100 may include a touchscreen type image display apparatus, a self-emitting display apparatus (i.e., a display apparatus without a separate backlight) such as an organic light emitting diode (OLED) display, or a non-self-emitting display apparatus (i.e., a display apparatus with a separate backlight) such as a liquid crystal display (LCD) apparatus. The backlight may include a light emitting diode (LED), a fluorescent light, etc. Although the image displaying apparatus 100 is described as a TV, it will be understood by those skilled in the art that the image displaying apparatus 100 may be any type of display apparatus, such as a computer or a cellular phone.

The image displaying apparatus 100 according to an exemplary embodiment may operate in conjunction with the resource supporting apparatus 110 to upgrade at least one of software, image quality, and hardware. For example, when the image displaying apparatus 100 is purchased, it may include an application (e.g., version 1.0) that is capable of editing a recording. However, when a later version of the application (e.g., version 1.1) is available, it may be possible to drive the image displaying apparatus 100 with this later version of application in conjunction with the resource supporting apparatus 110. In this case, the image displaying apparatus 100 may perform NFS-related communication with the resource supporting apparatus 110 in order to reduce the amount of data processed during communication with the resource supporting apparatus 110. Here, the NFS related communication may refer to communication associated with processing of files such as recordings.

For example, when a user controls the image displaying apparatus 100 to request to edit an arbitrary recording, for example, to request a personal video recorder (PVR) edit, the image displaying apparatus 100 may receive detailed editing information about a type of editing desired by the user together with the request via NFS communication. Accordingly, the image displaying apparatus 100 may perform a split function of splitting one file of a recording requested by the user into a plurality of pieces based on, for example, Linux or a truncate range function of truncating a specific region from one file and then may store the edited recording in an internal memory. In addition, whether editing of the recording is successful or fails may be indicated. In order to perform such a function, the image displaying apparatus 100 may perform communication according to a completely different type of communication protocol from a protocol for simply calling and storing or reading and writing data of the image displaying apparatus 100 via legacy NFS communication. In other words, a communication protocol for processing information for performing a detailed editing operation between the image displaying apparatus 100 and the resource supporting apparatus 110 may be supported.

Here, the PVR editing function may support the split function and the truncate function and the image displaying apparatus 100 may execute a PVR application in order to support the split function and the truncate function. As described above, the split function is a function of splitting one file into a plurality of pieces and the truncate function is a function of truncating a specific region from one file. Although the PVR editing function is capable of being embodied based on functions of manipulating a file provided by Linux-based glibc within a target, performance has decreased due to an increase in file size. For example, as the size of hard discs (HDDs) have gradually increased, file sizes have also gradually increased. For example, many files now exceed 2 GBs, thereby seriously degrading performance. According to an exemplary embodiment, in order to overcome this reduction in performance, the split function and the truncate function may be embodied by directly manipulating metadata instead of the glibc file operations. According to an exemplary embodiment, the two functions are considered as at least a PVR editing function.

The resource supporting apparatus 110 may be an independent apparatus from, for example, the image displaying apparatus 100 and, for example, may include Evolution Kit. The resource supporting apparatus 110 includes a resource for an operation with an updated version corresponding to a specific resource of the image displaying apparatus 100. As described above, when the image displaying apparatus 100 is capable of editing recordings, the image displaying apparatus 100 may include an application for editing recordings and execute the application to perform a corresponding editing operation. In this case, in order to reduce the amount of data processed between image displaying apparatuses 100 and the resource supporting apparatus 110, the resource supporting apparatus 110 may transmit editing information based on, for example, Linux, to the image displaying apparatus 100 so as to enable the image displaying apparatus 100 to perform the editing operation based on the corresponding information. In order to perform such an operation, the resource supporting apparatus 110 may perform NFS communication with the image displaying apparatus 100 and operate as a client of the image displaying apparatus 100.

The communication network 120 may include both wired and wireless communication networks. For example, the wired communication network may include the Internet such as a cable network or a public switched telephone network (PSTN), and the wireless communication network may include code division multiple access (CDMA), wideband CDMA (WCDMA), global system for mobile communications (GSM), evolved packet core (EPC), long term evolution (LTE), Wibro network, etc. Thus, when the communication network 120 is a wired communication network, an access point may access a telephone exchange, etc., but when the communication network 120 is a wireless communication network, the access may access a serving general packet radio service (GPRS) support node (SGSN) or gateway (GPRS) support node (GGSN) managed by a news agency and process data or may access various relays such as base station transmission (BTS), NodeB, e-NodeB, etc. and process data.

In addition, the communication network 120 includes a small base station access point (AP) such as a femto or pico base station (e.g., that is installed in a building). Here, the femto or pico base station is distinguished according to a maximum number of image displaying apparatuses 100 or the resource supporting apparatus 110 that are capable of accessing the base station based on the classification of a small base station. Needless to say, the access point (AP) includes the resource supporting apparatus 110 and a local area communication module for performing local area communication such as ZigBee, Wi-Fi, etc. According to an exemplary embodiment, the local area communication may be performed according to various protocols such as Bluetooth, ZigBee, infrared ray (IrDA), ultra high frequency (UHF), very high frequency (VHF), radio frequency (RF), ultra wide band (UWB), etc. in addition to WiFi. Accordingly, the AP extracts a position of a data packet, determines a best communication path for the extracted position, and transmits the data packet to a next apparatus, for example, the resource supporting apparatus 110 along the determined communication path.

The content providing apparatus 130 includes a broadcast server managed by, for example, a broadcast station. Alternatively, the content providing apparatus 130 may include a server of a content image provider that provides various content images, which may not be a broadcast station.

The aforementioned configuration will now be described briefly. According to user request, the image displaying apparatus 100 may record a broadcast program of a specific channel provided to the content providing apparatus 130, for example, a broadcast station. The corresponding recording may be stored in an internal memory or an external storage medium such as a universal serial bus (USB) storage. In this case, in response to determining that a capacity for storing the recoding in the storage medium is sufficient, the image displaying apparatus 100 may notify the resource supporting apparatus 110 of this information, and the user may control whether an editing operation is performed on the corresponding recording and how the recording is edited during the editing through a graphical user interface (GUI) image displayed on a screen of the image displaying apparatus 100. In addition, even if the storage capacity is not sufficient, the stored recording may be called and edited and re-stored in a manner desired by the user according to the user request. This procedure may be substantially performed through a GUI image displayed on the screen of the image displaying apparatus 100. For example, the user may perform control to split the recording in a time unit and further edit the obtained recording to exclude an advertisement from the obtained recording.

According to an exemplary embodiment, in order to operate the image displaying apparatus 100 with an updated version (e.g., a lasted version) of an application, the resource supporting apparatus 110 may directly provide information for performing the corresponding operation via NFS communication and the image displaying apparatus 100 may perform the corresponding operation based on received information so as to reduce the amount of data processed between the image displaying apparatus 100 and the resource supporting apparatus 110, thereby significantly reducing time taken to process the data.

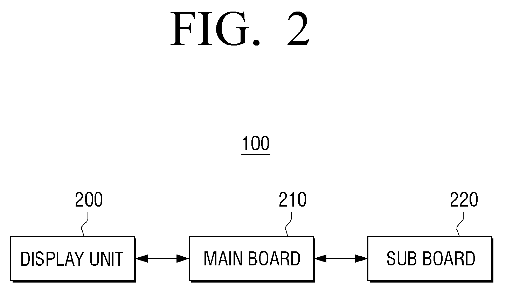

FIG. 2 is a diagram illustrating a structure of the image displaying apparatus 100 of FIG. 1 according to another exemplary embodiment.

As illustrated in FIG. 2, compared with FIG. 1, in which the image displaying apparatus 100 and the resource supporting apparatus 110 are independent from each other and do not operate in conjunction with each other, the resource supporting apparatus 110 may be configured in the form of a board in the image displaying apparatus 100.

For example, the image displaying apparatus 100 may include a display unit 200 (e.g., display) for displaying a display panel, a main board 210 for processing image data input from an external source and providing the image data to the display unit 200, and a sub board 220 connected to the main board 210 for operating the image displaying apparatus 100 according to an updated version.

Although described below in further detail, the main board 210 may include various circuit units such as a tuner for receiving broadcast of a specific channel, a decoder for decoding and processing the data received through the tuner, a scaler for scaling the decoded data, etc. In addition, the main board 210 may further include a GUI generator, etc., for displaying various menu images on the display unit 200. Various components such as the decoder, the scaler, etc. may include and execute a related program or application. In this regard, the sub board 220 may support these resources to be upgraded to a updated version (e.g., a latest version) and operate. To this end, the main board 210 and the sub board 220 may perform NFS communication. According to an exemplary embodiment, the NFS communication may be improved.

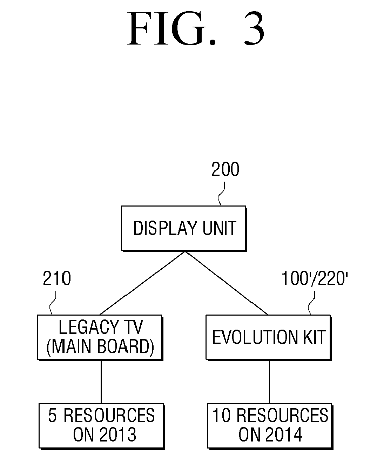

FIG. 3 is a diagram illustrating certain properties of the exemplary embodiments.

Referring to FIG. 3 together with FIGS. 1 and 2, the image displaying apparatus 100 according to an exemplary embodiment may use a resource such as hardware, etc., configured in the display unit 200 and the main board 210 of a legacy TV. For example, in a version of the main board 210 from 2013 may include 5 resources. Additionally, the image displaying apparatus may further use 10 resources corresponding to an updated version (e.g., from 2014) via conjunction with Evolution Kits 110' and 220'.

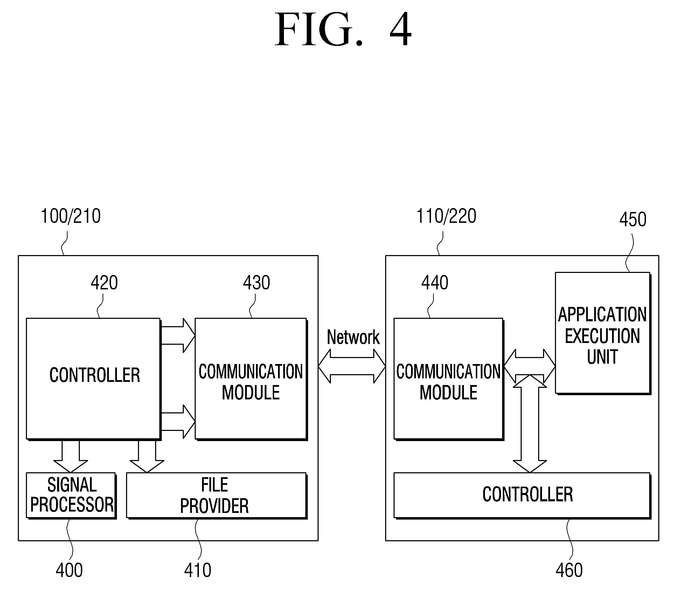

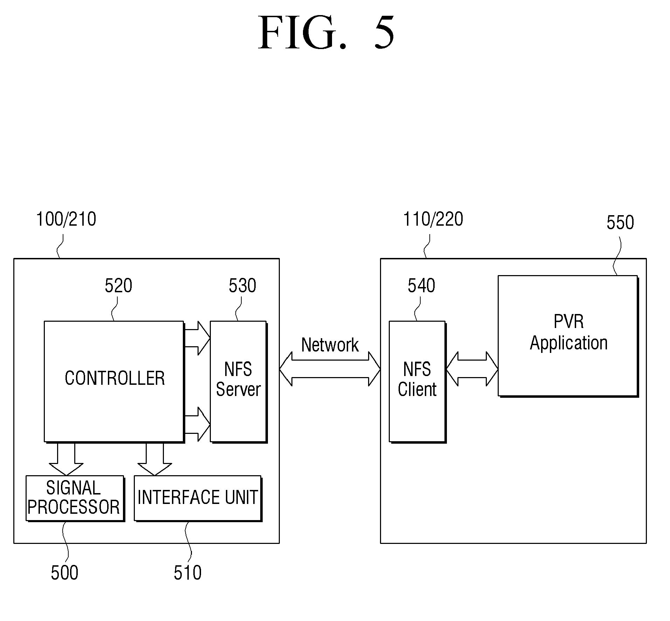

As such, even if a user owns, for example, an old version of TV, the user may upgrade the TV to a latest version via the Evolution Kits 110' and 220'. In this case, according to an exemplary embodiment, the amount of data processed between the image displaying apparatus 100 and the Evolution Kits 110' and 220' may be reduced so as to reduce data processing time via an improved NFS communication protocol. Here, the improved NFS communication protocol is a protocol designed to transmit an instruction for performing a split function and a truncate function. Put another way, information may be transmitted directly to the image displaying apparatus 100 to perform a corresponding operation when, for example, the Evolution Kits 110' and 220' perform a PVR editing function on a recording of the image displaying apparatus 100. FIG. 4 is a diagram illustrating a structure of the image displaying apparatus 100 and the resource supporting apparatus 110 of FIG. 1 or a structure of the main board 210 and the sub board 220 of FIG. 2. FIG. 5 is a diagram of a modified example of FIG. 4.

Referring to FIG. 4 together with FIG. 1, the image displaying apparatus 100 (or the main board 210) according to an exemplary embodiment may include all or some of a signal processor 400, a file provider 410, a controller 420, and a communication module 430 (e.g., communication unit or communicator), and the resource supporting apparatus 110 (or the sub board 220) may include a communication module 440 (e.g., communication unit or communicator) and an application execution processor 450 and may further include a controller 460. The communication modules 430 and 440 may each include a transceiver.

The signal processor 400 includes a tuner, a decoder, a scaler, etc., a detailed description of which has been described above in detail.

The file provider 410 includes at least one of an internal storage or a USB port for connection with an external storage medium. For example, when the file provider 410 is a storage, the controller 420 may record and store an image of a broadcast program of a specific channel, processed by the signal processor 400, according to a user request.

The controller 420 may control an overall operation of the signal processor 400, the file provider 410, and the communication module 430 included in, for example, the image displaying apparatus 100. For example, when editing of a recording supported through the file provider 410 is requested from the resource supporting apparatus 110, the controller 420 receives detailed editing information for the corresponding request through the communication module 430. In addition, the controller 420 may perform editing of the recording supported through the file provider 410 and re-store the edited recording through the file provider 410. Thus, the controller 420 may include an editor for editing a file. Alternatively, the controller 420 may be associated with a separate editor. In addition, the controller 420 may inform the resource supporting apparatus 110 of the edited processing result or display the edited processing result on a screen of the display unit 200 of FIG. 2 so as to allow the user to check the result.

The communication module 430 may perform NFS communication with a communication module 440 of the resource supporting apparatus 110. The communication module 430 may use any communication as long as information for driving a resource of the image displaying apparatus 100 is driven with an updated version (e.g., a latest version) even if NFS communication is not used. In addition, the communication module 430 may perform communication the communication module 440 of the resource supporting apparatus 110 via wired or wireless communication.

The application execution processor 450 includes an application for driving a specific resource of the image displaying apparatus 100 with an updated version. In addition, the application may be executed according to request of the controller 420 of the image displaying apparatus 100, but the corresponding application may be executed according to a separate controller 460 in the resource supporting apparatus 110. In this case, the application execution processor 450 may frequently upgrade an application included therein in the form of electrically erased programmable read only memory (ROM) (EEPROM) or firmware. Here, the firmware is interpreted as being supported in the form of online.

The controller 460 may control the communication module 440 and the application execution processor 450 in the resource supporting apparatus 110. For example, upon receiving file information associated with a file through the communication module 440, the controller 460 may determine the information and execute the application execution processor 450. Then the controller 460 may control the display unit 200, etc. of the image displaying apparatus 100 for overall processing of execution of the application execution processor 450. For example, in order to display a GUI image for file editing on a screen according to execution of the application execution processor 450, the controller 460 may directly control the display unit 200 of the image displaying apparatus 100. In addition, the controller 460 may process various pieces of information in order to perform a specific operation together with the controller 420 of the image displaying apparatus 100.

Compared with FIG. 4, FIG. 5 illustrates a case in which an interface unit 510 (e.g., interface device or interface) may be further included. The interface unit 510 may be implemented by the display unit 200 of FIG. 2, in addition to the file provider 410 of FIG. 4. In addition, FIG. 5 illustrates a case in which a plurality of communication modules 530 and 540 access a file and perform NFS communication for processing information associated with the file. Further, FIG. 5 illustrates that the application execution processor 450 of FIG. 4 is, for example, a PVR application for performing an editing function of a recoding. The controller 460 of the resource supporting apparatus 110 of FIG. 4 may be omitted or included in the PVR application execution processor 550.

For example, in order to perform the PVR editing function based on Linux, a NFS server 530 and a NFS client 540 may process information and other various pieces of additional information for performing a split function and a truncate function on a recording. Here, the additional information may refer to various pieces of information such as ID of a file, etc.

In addition, the PVR application execution processor 550 may perform a detailed operation for editing. For example, when a user requests editing of video, a video editing Ul, or more specifically, a representative thumbnail image, may be displayed for each respective arbitrary period and a thumbnail image may be selected to configure a period.

In other words, in order to perform an editing operation using a thumbnail image, the PVR application execution processor 550 according to an exemplary embodiment may perform only support to perform the corresponding operation in the image displaying apparatus 100. A thumbnail image may be substantially processed by the image displaying apparatus 100. For example, when a user issues a command for configuring a period and performing editing, the NFS client 540 may transmit information about corresponding thumbnail information and the configured information to the NFS server 530. Accordingly, a controller 520 of the image displaying apparatus 100 may perform an operation according to the corresponding information.

More specifically, upon receiving a request for editing of a recording stored in a storage from a user, the PVR application execution processor 550 may display information about the recording stored in the storage in the form of UI on a screen. In addition, when the user performs a specific editing function, corresponding information may be transmitted to the NFS server 530 through the NFS client 540 such that the controller 520 performs editing on the recording stored in the storage 510 according to received information.

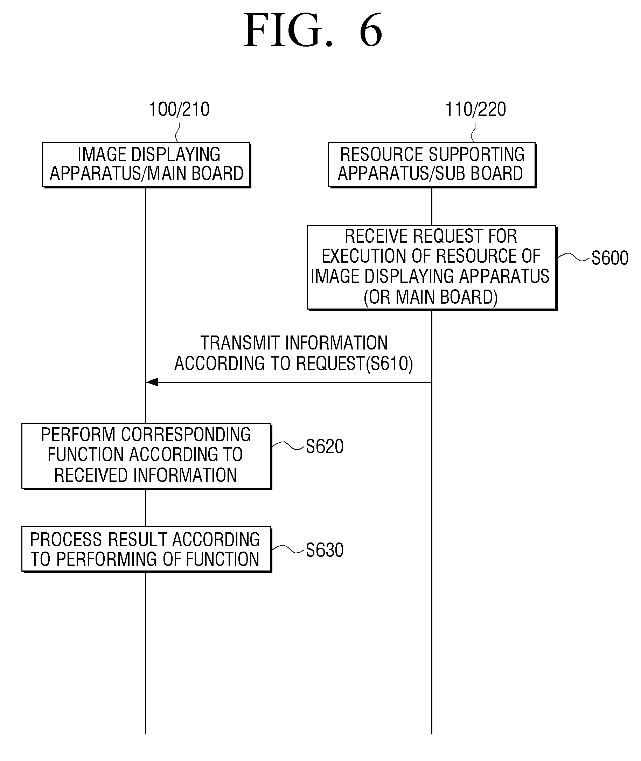

FIG. 6 is a diagram illustrating a method for upgrading an image displaying apparatus 100 according to an exemplary embodiment.

Referring to FIG. 6, the resource supporting apparatus 110 (or the sub board 220) according to an exemplary embodiment receives a request for execution of a resource of the image displaying apparatus 100 (or the main board 210) that is physically separate (S600). For example, when an application for execution of a resource is executed, the image displaying apparatus 100 may display a UI image for reception of the request. Execution of an application may be performed through information provided from the image displaying apparatus 100. For example, when the image displaying apparatus 100 is connected to a storage medium and then a recording is discovered in the image displaying apparatus 100, the image displaying apparatus 100 may inform the resource supporting apparatus 110 of the discovery.

Thereafter, the resource supporting apparatus 110 transmits information according to the request to the image displaying apparatus 100 (S610). The request for execution of a resource may include information about a specific resource and include detailed information for performing a specific operation of the resource. For example, thus far, although the editing function has been described for convenience of description, for example, resource information associated with decoding may be provided during decoding, information about a type of decoding may be provided during decoding, and resource information associated with scaling and a type of scaling may be provided during scaling. However, according to an exemplary embodiment, file related information for NFS communication may be processed.

In addition, the image displaying apparatus 100 performs a corresponding function according to received information (S620). For example, in the case of an editing operation, the image displaying apparatus 100 may perform a corresponding operation according to split and truncate information configured by the user. For example, according to a command for splitting a specific file in time unit, the corresponding specific file is split, and in this case, according to a command for excluding an advertisement part, the corresponding advertisement is deleted and the recording is edited.

Then the image displaying apparatus 100 may store, for example, the edited recording in an internal memory or an external storage medium and furthermore, may display whether the editing was successful or not on a screen or may provide the processing result to the resource supporting apparatus 110.

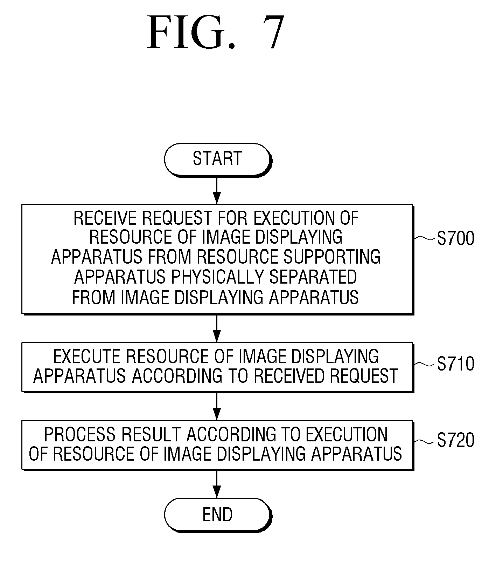

FIG. 7 is a flowchart illustrating a driving procedure of an image displaying apparatus (or a main board) according to an exemplary embodiment.

For convenience of description, referring to FIG. 7 together with FIG. 1, the image displaying apparatus 100 according to an exemplary embodiment receives a request for execution of a resource of the image displaying apparatus 100 from the resource supporting apparatus 110 that is physically separated from the image displaying apparatus 100 (S700). Upon receiving the request, the image displaying apparatus 100 may receive information about execution of a resource and detailed information, which has been sufficiently described above.

Prior to operation S700, for example, the image displaying apparatus 100 may determine whether a file is provided, provide information about a corresponding file to the resource supporting apparatus 110 when it is determined that the file is provided as the determination result, and receive information about the file edited based on the provided file information. In other words, when a user edits a file of a recording (e.g., recording 1) among a plurality of recordings, the image displaying apparatus 100 may receive ID information of recording 1 and other detailed editing pieces of information.

Then the image displaying apparatus 100 executes a resource of the image displaying apparatus 100 according to the received request (S710). In other words, in the case of an editing function, any type of editing may be performed, and in the case of decoding and processing, any type of decoding and processing may be performed.

Then the image displaying apparatus 100 processes a result according to execution of a resource (S720). In other words, in the case of editing, the image displaying apparatus 100 may store the edited recording in a storage or an external storage medium and display whether the editing is successful or not in the form of UI on a screen.

Although the image displaying apparatus 100 and the resource supporting apparatus 110 have been exemplified with reference to FIG. 7, the operations of the main board 210 and the sub board 220 in the image displaying apparatus 100 are merely exemplary.

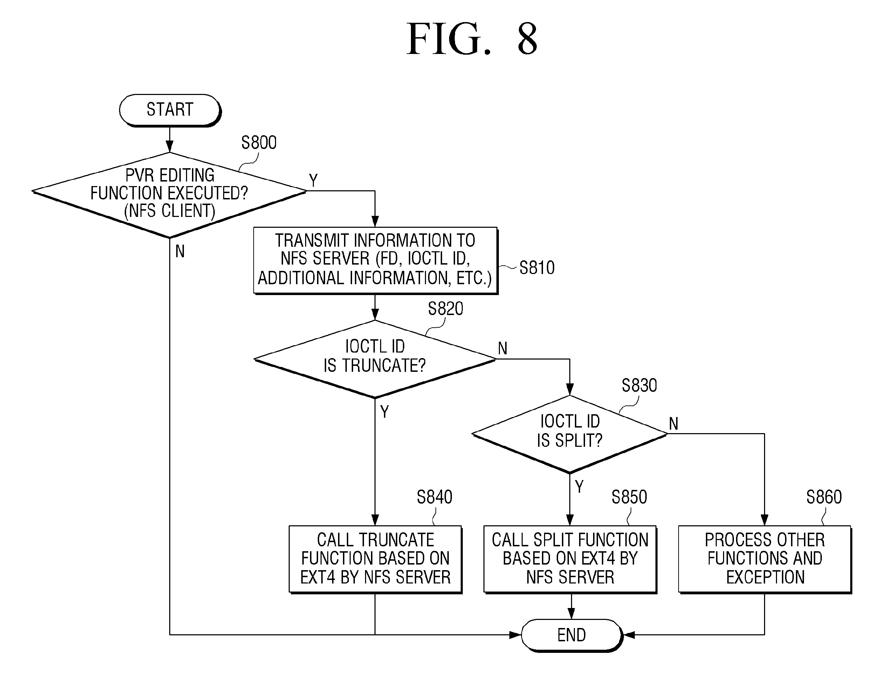

FIG. 8 is a flowchart of a driving procedure of an image displaying apparatus (or a main board) according to another exemplary embodiment.

For convenience of description, referring to FIG. 8 together with FIGS. 1 and 5, the image displaying apparatus 100 according to an exemplary embodiment may determine whether a PVR editing function is executed (S800). For example, when a user connects a storage medium to a USB port or executes a PVR application in the resource supporting apparatus 110, the image displaying apparatus 100 and the resource supporting apparatus 110 may determine whether the PVR editing function is executed.

When the PVR editing function is executed, the NFS server 530 of the image displaying apparatus 100 may receive editing information and other additional pieces of information from the NFS client 540 (S810). The editing information about editing, etc. may be configured through a UI image display on a screen of the image displaying apparatus 100.

Then the controller 520 in the image displaying apparatus 100 determines whether corresponding information is split information or truncate information based on the corresponding information (S820 and S830). In other words, the controller 520 determines whether an operation for splitting one file into a plurality of pieces needs to be performed or an operation for truncating a specific region from one file needs to be performed.

Then the image displaying apparatus 100 performs a specific operation according to the determination result (S840, S850, and S860). In other words, when the corresponding information is determined to be truncate information, the operation for truncating a specific region from one file is performed, and when the corresponding information is determined to be split information, the operation for splitting one file into a plurality of pieces is performed.

As described above, according to an exemplary embodiment, the resource supporting apparatus 110 as an external apparatus transmits editing information directly to the image displaying apparatus 100 via NFS communication so as to reduce the amount of data processed between the image displaying apparatus 100 and the resource supporting apparatus 110, thereby reducing time taken to process the data.

Although not illustrated in a separate drawing, a resource supporting method according to an exemplary embodiment, for example, a driving method of the resource supporting apparatus 110 illustrated in FIG. 1 may be sufficiently inferred from FIGS. 4 and 5 and the detailed description thereof and thus, a separate detailed description of the driving method is omitted herein.

Although a case in which all components according to the exemplary embodiments are combined or operate with the combinations has been described, the exemplary embodiments are not limited thereto. That is, one or more components may be selectively combined or may operate with the combinations within a range for the object of the exemplary embodiments. In addition, each of the components may be embodied as an independent hardware, but all or some of the components may be selectively combined and embodied as a computer program having a program module that performs all or some of functions combined by one or more hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a hardware component may include multiple processors or a processor and a controller. In addition, different processing configurations are possible, such a parallel processors.

The methods described above can be written as a computer program, a piece of code, an instruction, or some combination thereof, for independently or collectively instructing or configuring a processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable mediums. The media may also include, alone or in combination with the software program instructions, data files, data structures, and the like..

Here, the non-transitory computer readable media may include any data data storage device that can store data that can be thereafter read by a computer system or processing device. Examples of the non-transitory computer readable media include ROM, random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, WiFi, etc.). In addition, functional programs, codes, and code segments for accomplishing the example disclosed herein can be construed by programmers skilled in the art based on the flow diagrams and block diagrams of the figures and their corresponding descriptions as provided herein.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the inventive concept, as defined by the appended claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image displaying apparatus comprising:
a file provider configured to provide a file;
a communication unit configured to communicate with an external apparatus that executes a file editing application; and
a controller configured to transmit file information provided from the file provider to the external apparatus and to edit the file based on editing information about the file received in response to the transmitting of the file information.

2. The image displaying apparatus as claimed in claim 1, wherein the file provider comprises a storage medium in which the file is stored or an interface unit connected to a storage unit in which the file is stored or.

3. The image displaying apparatus as claimed in any one of claims 1 and 2, wherein:
the file provider, the communication unit, and the controller are included in a main board; and
the external apparatus is a sub board connected to the main board in the image displaying apparatus.

4. The image displaying apparatus as claimed in any one of claims 1 to 3, wherein the communication unit is connected to the external apparatus via a Network File System for sharing a file.

5. The image displaying apparatus as claimed in any one of claims 1 to 4, wherein the editing information is associated with an operation for splitting one file into a plurality of pieces and a truncate range for truncating a specific region from one file.

6. The image displaying apparatus as claimed in any one of claims 1 to 5, further comprising a display unit configured to display a graphic user interface (GUI) image for editing the file according to execution of the file editing application.

7. The image displaying apparatus as claimed in claim 6, wherein the display unit is controlled directly by the external apparatus.

8. The image displaying apparatus as claimed in any one of claims 1 to 7, wherein the controller comprises an editor configured to edit the file.

9. A driving method of an image displaying apparatus, the method comprising:
providing a file;
when the file is provided, transmitting file information to an external apparatus for execution of a file editing application and receiving, from the external apparatus, editing information of the file based on the transmitted file information; and
editing the file based on the provided editing information.

10. The method as claimed in claim 9, wherein the providing comprises providing the file through an interface unit connected to a storage unit in which the file is stored or a storage medium in which the file is stored.

11. The method as claimed in any one of claims 9 and 10, wherein the image displaying apparatus is connected to the external apparatus via a Network File System for sharing a file.

12. The method as claimed in any one of claims 9 to 11, wherein the editing information is associated with an operation for splitting one file into a plurality of pieces and a truncate range for truncating a specific region from one file.

13. The method as claimed in any one of claims 9 to 12, further comprising displaying a graphic user interface (GUI) image for editing the file according to execution of the file editing application.

14. The method as claimed in claim 13, wherein the displaying is controlled by the external apparatus.
